# EUROPEAN PATENT SPECIFICATION

(11) **EP 3 898 738 B1**
(45) Date of publication and mention of the grant of the patent: **23.08.2023**
(21) Application number: 19835542.2
(22) Date of filing: 20.12.2019
(51) Int. Cl.: C08G 18/08, C08G 18/22, C08G 18/44, C08G 18/32, C08G 18/38, C08G 18/66, C08G 18/73, C08G 18/75, C09D 175/04

(54) **PROCESS TO PREPARE HALOGEN-FREE, FLAME-RETARDANT AQUEOUS POLYURETHANE DISPERSIONS**
VERFAHREN ZUR HERSTELLUNG VON HALOGENFREIEN FLAMMHEMMENDEN WÄSSRIGEN POLYURETHANDISPERSIONEN
PROCÉDÉ DE PRÉPARATION DE DISPERSIONS AQUEUSES POLYURÉTHANE IGIFUGES ET SANS HALOGÈNES

(30) Priority: 21.12.2018 NL 2022275
(43) Date of publication of application: 27.10.2021
(73) Proprietor: Stahl International B.V., 5145 PE Waalwijk (NL)
(72) Inventor: DERKSEN, Andries Johannes, 5145 PE Waalwijk (NL); DEKKERS, Jan, 5145 PE Waalwijk (NL)
(74) Representative: V.O.
(86) International application number: PCT/NL2019/050866
(87) International publication number: WO 2020/130831

(56) References cited:
- DE-A1-102015 116 528
- US-A1- 2014 275 411
- DATABASE WPI Week 201736 Thomson Scientific, London, GB; AN 2017-191891 XP002792825, & CN 106 496 486 A (CHINA TEXTILE ACAD JIANGNAN BRANCH) 15 March 2017 (2017-03-15) cited in the application

## Description

This invention relates to a process for the preparation of an aqueous polyurethane dispersion that gives flame retardant properties and that is halogen-free.

Aqueous dispersions of polyurethanes are well known as basis for the production of coating compositions. They may be used for protective or decorative coating, optionally in combination with additives like colouring agents, pigments, matting agents, and the like. Polyurethanes can possess many desirable properties such as good chemical resistance, water resistance, solvent resistance, toughness, abrasion resistance, durability.

As is well known in the art, aqueous polyurethane dispersions are particularly advantageously prepared by dispersing an isocyanate-terminated polyurethane prepolymer bearing ionic dispersing groups into an aqueous medium and then reacting the prepolymer with an active hydrogen containing chain extender while dispersed in the aqueous medium. See e.g. US 4046729 and US 4066591.

There are several approaches to achieve flame retardant properties in aqueous polyurethane dispersion. This can be done by adding flame retardant additives to the aqueous polyurethane dispersions, such as solid additives, for example melamine, aluminium oxide, magnesium oxide or ammonium polyphosphates, or halogen-containing alkyl phosphates, for example tris(chloroethyl) phosphate, tris(chloroisopropyl) phosphate and tris(2,3-dichloroisopropyl) phosphate, or other halogen-containing additives, for example decabromodiphenyl ether, hexabromocyclododecane, and 1,2-ethylene bis(tetrabromophthalimide). However, using additives has always the risk that the additives are washed out of the dried coating. It is therefore advantageous to incorporate reactive flame retardants into the polymer itself. For polyurethanes, such reactive flame retardant components were traditionally often halogen-containing, such as tetrabromo bisphenol A, dibromoneopentyl glycol, tribromoneopentyl alcohol and tetrabromo bisphenol A bisethoxylate. However, using such halogen-containing flame retardants is receiving increasing criticism from end-users and the halogen content in the end product is in some cases limited by third-party certification marks (product labels). There is therefore a big motivation to use halogen-free flame retardants. One type of such non-halogen based flame retardants is based on phosphorous. There are phosphorous based flame retardants that are used as additives, like triphenyl phosphate, tricresyl phosphate, resorcinol bis(diphenylphosphate), ammonium polyphosphate, and there are phosphorous based reactive flame retardants. These phosphorous based reactive flame retardants include phosphates and phosphinates, such as 9,10-dihydro-9-oxa-10-phosphapenanthrene-10-oxide (DOPO), phosphate polyols, polymethylphenyl phosphinate (PMP), phosphoric esters, phosphate esters and phosphinate polyols.

US 2009/0156704 A1 describes flame retarded polyurethane foam compositions that contain phosphate ester additives with alkyl or aryl groups.

US 2017/0190827 A1 describes flame resistant flexible polyurethane foam, obtainable from a reactive formulation containing alkyl substituted aryl phosphate and graphite.

US 2017/0306122 A1 describes a process to obtain halogen-free polyurethane foam with flame retardant properties, using phosphoric esters as flame retardant.

EP 1785439 B1 describes flame-retardant polyurethane foams which comprise, as flame retardant, 2-hydroxyalkanephosphonates and/or 3-hydroxyalkanephosphonates.

EP 510743 B1 and US 4343914 describe the use of phosphine oxide diol in the preparation of polyurethane foams.

US 7160974 B2 describes the use of phosphine oxide diol in the preparation of thermoplastic polyurethane elastomers.

US 2018/0282468 A1 describes flame retardant waterborne polyurethanes in which hydroxyl-terminated phosphonate oligomer has been incorporated into the polyurethane.

CN 106496486 A describes a halogen-free aqueous polyurethane dispersion in which hydroxyl-terminated phosphonate monomer has been incorporated into the polyurethane.

DE 102015116528 describes aqueous polyurethane dispersions containing units based on phosphorous-containing diols (phosphonates) and the corresponding flame-retardant clear coatings.

The incorporation of phosphorous based reactive flame retardants into an aqueous polyurethane dispersion gives flame retarding properties to the dried film of those aqueous polyurethane dispersions. Because these aqueous polyurethane dispersions contain a lot of water, it is essential that the phosphorous based reactive flame retardants moiety is stable under hydrolytic conditions. The use of phosphate polyols, phosphoric esters, phosphate esters, and phosphinate polyols are then a risk, because their phosphorous based reactive flame retardant moiety not only contains a double bonded oxygen atom to the phosphorous atom, but also an phosphorous-oxygen bond that will become part of the polymer chain, which upon cleavage or hydrolysis would break the polymer chain.

It is an object of the present invention to provide an aqueous polyurethane dispersion having flame-retardant properties based on halogen-free flame retardants that are incorporated into the polyurethane chain and that are stable under hydrolytic conditions.

It has been found that incorporating a phosphine oxide polyol as phosphorous based reactive flame retardant into the polyurethane of a aqueous polyurethane dispersion gives flame retardant properties to the dried film of such aqueous polyurethane dispersion, while the phosphorous based reactive flame retardant moiety contains a double bonded oxygen atom to the phosphorous atom.

The present invention provides a process for the preparation of an aqueous polyurethane dispersion having flame retardant properties and being halogen-free, comprising the steps of:
i) synthesizing a polyurethane prepolymer from isocyanates, polyols, which may include polyols with hydrophilic groups or polyols that have an additional functional group that is capable of forming a salt, and a phosphine oxide polyol,
ii) dispersing the obtained prepolymer into a water phase optionally comprising other additives,
(iii) adding one or more neutralizing agents prior to, simultaneously with or after dispersing the prepolymer in water,
(iv) forming polyurethane by reacting with one or more extension agents simultaneously with or subsequent to the dispersing, after which optionally other additives may be added.

In the context of the present invention "flame retardant properties" means that the product prevents flames to propagate or reduces the propagation of flames. This can be measured in centimetres or in seconds, depending on the type of measurement.

In the context of the present invention "halogen-free" means that there are no halogenated flame retardants or generally other halogen-containing additives present. In general, halogen-free means that the amount of halogen present is below 100 ppm.

Polyurethane dispersions are generally made by dispersing a polyurethane prepolymer into water. Suitable prepolymers may be made using isocyanate components. These isocyanates are reacted with polyols. Preferred prepolymers may be made with aliphatic di-isocyanates, aromatic di-isocyanates, or a mixture of aromatic and aliphatic di-isocyanates, such as toluene-2,4-diisocyanate, toluene-2,6-diisocyanate and mixtures thereof, diphenylmethane-4,4-diisocyanate, 1,4-phenylenediisocyanate, dicyclohexylmethane-4,4'-diisocyanate, 3-isocyanatomethyl-3,5,5-trimethylcyclo-hexylisocyanate, 1,6-hexyldiisocyanate, 1,5-pentyldiisocyanate, 1,3-bis(isocyanatomethyl)cyclohexane, 2,2,4-trimethyl-1,6-diisocyanatohexane (2,2,4-isomer, 2,4,4-isomer, or mixture thereof), 1,4-cyclohexyldiisocyanate, norbonyldiisocyanate, p-xylylene diisocyanate, 2,4'-diphenylmethane diisocyanate, and/or 1,5-naphthylene diisocyanate. Mixtures of polyisocyanates can be used and also polyisocyanates which have been modified by the introduction of urethane, allophanate, urea, biuret, carbodiimide, uretonimine or isocyanurate residues. Particularly preferred polyisocyanates include aliphatic polyisocyanates such as 3-isocyanatomethyl-3,5,5-trimethylcyclohexylisocyanate, hexamethylene diisocyanate and dicyclohexyl-methane-4,4'-diisocyanate.

Polymeric polyols having molecular weights in the range of 500 to 6000 which may be used in the preparation of the prepolymer particularly include diols and triols and mixtures thereof but higher functionality polyols may be used as well, for example as minor components in admixture with diols. The polyols may be members of any of the chemical classes of polymeric polyols used or proposed to be used in polyurethane formulations. Preferred polyols are selected from the group of polyester polyols, polyesteramide polyols, polyether polyols, polythioether polyols, polycarbonate polyols, polyacetal polyols, polyolefin polyols or polysiloxane polyols or mixtures thereof. Preferred polyol molecular weights are from 700 to 4000. Polyols having molecular weights below 500 which may optionally be used in the preparation of the prepolymer particularly include diols and triols and mixtures thereof but higher functionality polyols may be used. Examples of such lower molecular weight polyols include ethylene glycol, diethylene glycol, triethylene glycol, tetraethylene glycol, bis (hydroxyethyl) terephthalate, neopentylglycol, trimethylol propane, cyclohexane dimethanol, furan dimethanol, glycerol and the reaction products, up to molecular weight 499, of such polyols with propylene oxide and/or ethylene oxide.

Phosphine oxide polyols, preferably diols or triols, for use according to the present invention generally contain at least two hydroxyalkyl, preferably 3-hydroxypropyl groups, and have the formula (HO-R'-)₂P(=O)R, wherein the R' group is an alkyl chain of e.g. 2 to 5 carbon atoms with preference to 3 carbon atoms, which may be linear or branched or further substituted, and R is an alkyl, cycloalkyl or aryl radical of from 2 to 8 carbon atoms which may also contain additional functional groups like hydroxyl or another phosphine oxide. Examples of suitable phosphine oxide polyols for use according to the invention include methyl-(bis-n-hydroxypropyl)phosphine oxide, ethyl-(bis-n-hydroxypropyl)phosphine oxide, n-butyl-(bis-n-hydroxypropyl)phosphine oxide, iso-butyl-(bis-n-hydroxypropyl)phosphine oxide, hexyl-(bis-n-hydroxypropyl)phosphine oxide, phenyl-(bis-n-hydroxypropyl)phosphine oxide, 4,4'-(methylphosphinylidene)bis-2-butanol, 1-[(3-hydroxybutyl) methylphosphinyl]-1,3-propanediol, 3,3',3"-phosphinylidynetris[2-methyl-1-propanol, 3,3'-[(1-methylpropyl)phosphinylidene]bis-1-propanol, 3-[bis(3-hydroxypropyl)phosphinyl]-2-methyl-1-propanol, 4,4',4"-phosphinyli-dynetris-2-butanol, cyclohexyl(bis-n-hydroxypropyl)phosphine oxide, 3,3'-(cyclohexylphosphinylidene)di-cyclohexanol, (tris-n-hydroxypropyl)phosphine oxide, n-hydroxyethyl(bis-n-hydroxypropyl)phosphine oxide, 3,3',3", 3"'-(1,2-ethanediyldiphosphinylidyne)tetrakis-1-propanol, 3,3'-(cyclooctyl-phosphinylidene)bis-1-propanol, 4,4'-(methylphosphinylidene)di-1-butanol, 4,4',4"-phosphinylidynetris-1-butanol, 4,4'-(pentylphosphinylylidene)bis-1-butanol, 2,2'-(methylphosphinylidene)bis-ethanol, 2,2'-(ethylphosphinyliden e)bis-ethanol, 2,2'-(propylphosphinylidene)bis-ethanol, 2,2'-(butylphosphinylidene)bis-ethanol, 2,2'-(dodecylphosphinylidene)bis-ethanol, 2,2'-(phenylphosphinylidene)bis-ethanol. A particularly preferred phosphine oxide polyol for use according to the invention is iso-butyl-(bis-n-hydroxypropyl)phosphine oxide.

According to the invention only one specific phosphine oxide polyol is used to prepare the aqueous polyurethane dispersion or two or more different phosphine oxide polyols can be used. In the context of the present invention, the total amount of the phosphine oxide polyol is generally between 1 weight% and 20 weight%, preferably between 2 weight% and 15 weight%, most preferably between 3 weight% and 12 weight% of the phosphine oxide polyol, compared to total weight of the polyol and isocyanate components in the prepolymer. A high amount of phosphine oxide polyol is desirable, because the flame retardant properties originate in the amount of phosphorous present in the polyurethane and thus in the amount of phosphine oxide polyol, but incorporating a relatively short polyol such as the phosphine oxide polyol of the present invention will result in a harder coating or dried film obtained from the aqueous polyurethane dispersion containing the phosphine oxide polyol, which is not desirable when flexible substrates are to be coated and hence the amount of the phosphine oxide polyol should also not be too high.

In the context of the present invention, the phosphine oxide polyol is reacted simultaneously with all the other reactive components in the prepolymer or is reacted last with the isocyanate components, subsequent to the reaction of isocyanate components with the other isocyanate-reactive components.

Dispersibility of the polyurethanes in water can be achieved by incorporating hydrophilic groups into the prepolymer. For this reason other polyols may be present during the prepolymer formation such as a polyethoxy diol, a poly(ethoxy/propoxy) diol, a diol containing a pendant ethoxy or (ethoxy/propoxy) chain, a diol containing a carboxylic acid, a diol containing a sulfonic group, a diol containing a phosphate group, a polyethoxy mono-ol, a poly(ethoxy/propoxy) mono-ol, a mono-ol containing a pendant ethoxy or (ethoxy/propoxy) chain, a mono-ol containing a carboxylic acid or a sulfonic acid or salt, or mixtures thereof. A diol containing a carboxylic acid include carboxyl group containing diols and triols, for example dihydroxy alkanoic acids of the formula: R-C-(CH₂-OH)₂-COOH wherein R is hydrogen or alkyl. Examples of such carboxyl containing diols are 2,2-dimethylolpropionic acid and 2,2-dimethylolbutanoic acid. Other useful acid group containing compounds include amino carboxylic acids, for example lysine, cysteine and 3,5-diaminobenzoic acid and sulfonic acids, for example 4,6-diaminobenzene-1,3-disulphonic acid.

The carboxylic acid functions are generally neutralized with a volatile tertiary amine neutralizing agent before or during dispersion of the polyurethane prepolymer into water; yet other known neutralizing agents can be used as well, such as alkaline metal hydroxides. Both the polyurethane and the tertiary amine functional urethane polymer or oligomer or dispersion thereof may contain additional functional groups with the objective to improve the water dispersibility, to improve adhesion to substrates during application, for performance reasons, or as potential sites for crosslinking. Suitable functions are polyalkoxy functions with a large concentration of ethoxy functions, tertiary amine or quaternary amine functions, perfluoro functions, incorporated silicon functions, hydrazide functions or hydrazone functions, ketone, acetoacetate, or aldehyde functions, or mixtures thereof.

The conversion of any acid groups present in the prepolymer to anionic groups may be effected by neutralising the said acidic groups before, after or simultaneously with formation of the aqueous dispersion. Suitable neutralising agents include tertiary amines such as tripropylamine, dimethyl butyl amine, dimethyl ethanol amine, diethyl ethanol amine, triethylamine, 2-amino-2-methyl-1-propanol and N-ethylmorpholine and include alkaline metal hydroxides such as sodium hydroxide, potassium hydroxide, lithium hydroxide or non-volatile tertiary amines such as N-butyldiethanolamine or N,N-bis[3-(dimethylamino)propyl]-N',N'-dimethylpropane-1,3-diamine or mixtures thereof.

The prepolymer may contain between 0% and 35 weight% co-solvents to achieve a low(er) viscosity, but preferably the prepolymer contains less than 20 weight% co-solvent. If used, suitable co-solvents are N-ethyl pyrrolidine, acetone, 2-butanone, 2,2'-ethylenedioxydiethyl bis(2-ethylhexanoate and dipropylene glycol dimethyl ether. Not only are these co-solvents used to reduce the viscosity of the prepolymer, but also do these allow for a more convenient handling during the dispersion step.

Polyurethane prepolymers useful in the practice of the present invention may be prepared in conventional manner by reacting a stoichiometric excess of the organic polyisocyanate with the polymeric polyol having a molecular weight in the range 500 to 6000 and the other required isocyanate-reactive compounds under substantially anhydrous conditions at a temperature between about 30°C and about 130°C until reaction between the isocyanate groups and the hydroxyl groups is substantially complete. The polyisocyanate and the active hydrogen containing components are suitably reacted in such proportions that the ratio of number of isocyanate groups to the number of hydroxyl groups is in the range from about 1.1:1 to about 6:1, preferably within the range of from 1.5:1 to 3:1. If desired, catalysts, such as bismuth carboxylate, zinc carboxylate, dibutyltin dilaurate, aluminium chelate, zirconium chelate, stannous octoate or triethylenediamine, may be used to assist prepolymer formation.

Prepolymers useful in the practice of the present invention should be substantially liquid under the conditions of the dispersing step, which means that these prepolymers should have a viscosity below 100,000 mPa.s at a temperature of 90°C, measured using a Brookfield LVF Viscometer.

The present invention includes generally an extension agent, which is used to build the molecular weight of the polyurethane prepolymer by reacting the extension agent with the isocyanate functionality of the polyurethane prepolymer. The active hydrogen containing extension agent which is reacted with the prepolymer is suitably a polyol, an amino alcohol, ammonia, a primary or secondary aliphatic, alicyclic, aromatic, araliphatic or heterocyclic amine especially a diamine, hydrazine or a substituted hydrazine. Water-soluble extension agents are preferred, and water itself may be effective. Examples of suitable extension agents useful herein include ethylene diamine, diethylene triamine, triethylene tetramine, propylene diamine, butylene diamine, hexamethylene diamine, cyclohexylene diamine, piperazine, 2-methyl piperazine, phenylene diamine, bis(3-aminopropylamine), sodium 2-[(2-aminoethyl)amino]ethane-sulfonate, tolylene diamine, xylylene diamine, tris (2-aminoethyl) amine, 3,3'-dinitrobenzidine, 4,4'methylenebis (2-chloraniline), 3,3'-dichloro-4,4'biphenyl diamine, 2,6-diaminopyridine, 4,4'-diaminodiphenylmethane, menthane diamine, m-xylene diamine, 5-amino-1,3,3-trimethyl-cyclohexanemethyl-amine, sodium 2-[(2-aminoethyl)amino]ethanesulfonate (e.g. Vestamin A95 from Evonik), lysine, 3-(2-aminoethylamino)propane-1-sulfonic acid, polymer of 3-(2-aminoethylamino)propane-1-sulfonic acid (Poly-EPS from Raschig), sodium N-(2-aminoethyl)-β-alaninate (PUD Salt from BASF), amine terminated polyethers such as, for example, Jeffamine D-230 from Huntsman Chemical Company, and adducts of diethylene triamine with acrylate or its hydrolyzed products. Also suitable are materials such as hydrazine, azines such as acetone azine, substituted hydrazines such as, for example, dimethyl hydrazine, 1,6-hexamethylene-bis-hydrazine, carbodihydrazine, hydrazides of dicarboxylic acids and sulfonic acids, adipic acid mono- or dihydrazide, oxalic acid dihydrazide, isophthalic acid dihydrazide, tartaric acid dihydrazide, 1,3-phenylene disulfonic acid dihydrazide, omega-amino-caproic acid dihydrazide, hydrazides made by reacting lactones with hydrazine such as gamma-hydroxylbutyric hydrazide, bis-semi-carbazide, bis-hydrazide carbonic esters of glycols such as any of the glycols mentioned above. The amount of extension agent employed should be approximately equivalent to the free-NCO groups in the prepolymer, the ratio of active hydrogens in the chain extender to NCO groups in the prepolymer preferably being in the range from 0.7:1 to 2.0:1. Of course when water is employed as the extension agent, these ratios will not be applicable since the water, functioning both as extension agent and dispersing medium, will be present in a gross excess relative to the free-NCO groups.

While polyurethane prepolymers may retain some isocyanate reactivity for some period of time after dispersion, for purposes of the present invention, a polyurethane prepolymer dispersion is considered to be a fully reacted polyurethane polymer dispersion. Also, for purposes of the present invention, a polyurethane prepolymer or polyurethane polymer can include other types of structures such as, for example, urea groups.

The aqueous polyurethane dispersion comprises at least 30 wt%, preferably at least 35 wt% of polyurethane polymer particles based on total mass of the dispersion. As conventionally done by the skilled person, the weight percentage is calculated beforehand, taking into account which components evaporate and which components do not evaporate. The solids percentage is at a later stage measured to confirm: thereto, a small amount is weighted, then put in an oven at 105°C during one hour and the remaining amount is measured. In this control step, a higher or longer temperature/time regime can be chosen as well, if there are slowly evaporating components present.

If desired, amounts of emulsifiers, defoamers, flame retardants, thickeners, stabilizers, wetting agents, biocides, anti-oxidants and/or anti-settling agents may be included in the prepolymer or the water phase, or may be added to the aqueous polyurethane dispersion.

The prepolymer thus prepared and a water phase are being mixed to obtain a polyurethane dispersion, wherein the extension agent, if the extension agent is different from water, can be added to the water phase prior to the dispersing step, or can be added during the dispersing step, or can be added to the dispersion after the dispersing step. Optionally, neutralization agents, undiluted or with water diluted additives, like emulsifiers, defoamers, flame retardants, thickeners, stabilizers, anti-oxidants and/or anti-settling agents can be added to the water phase or to the dispersion.

The viscosity of the aqueous polyurethane dispersion of the invention is generally lower than 1000 mPa.s, preferably lower than 750, more preferably lower than 500, and most preferably lower than 250 mPa.s, as measured at 25°C using a Brookfield LVF Viscometer.

The invention also relates to the use of the present aqueous polyurethane dispersion for the coating of a very wide range of substrates, preferably wood, paper, textile, plastic and metal, in particular of textile. The present invention also relates to the substrates coated with the aqueous polyurethane dispersion prepared according to the invention. The invention furthermore relates to a process for the coating of substrates, in particular of textile which is characterized in that the aqueous polyurethane dispersion according to the invention is applied to substrates. Suitable application techniques are known methods, such as application with a doctor blade, spraying, casting or coating by means of a reverse roll coater.

The present invention will be further elaborated by the following non-limiting working examples. Parts and percentages of components referred to in these working examples are drawn to the weight of the total composition wherein these components are present, like in the other parts of the description and claims, unless otherwise indicated.

### Examples

### Example 1: preparation of polyurethane dispersion

Under a nitrogen atmosphere a mixture of 425 g of a polycarbonate diol, derived from hexanediol, with a molecular weight of 2000, 250 g of dipropylene glycol dimethyl ether, 5 g of trimethylolpropane and 40 g of dimethylolpropanoic acid were heated to 50°C while stirring. 240 g of 3-isocyanatomethyl-3,5,5-trimethylcyclohexylisocyanate, together with 0.05 g of K-Kat 348 (from King Industries) as catalyst, were added and the mixture was heated to 85°C and stirred for 1 hour. Subsequently, 35 g of isobutyl-(bis-n-hydroxypropyl)phosphine oxide was added to the mixture which was kept at 85°C and stirred for another hour to form a polyurethane prepolymer. The reaction was cooled down and the amount of remaining NCO was measured. A mixture was made of 450 g of the prepolymer and 8 g of triethylamine, and this mixture was dispersed into a water phase consisting of 520 g of water, 7 g of Aerosol OT-75 (a 75% solution of sodium dioctyl sulfosuccinate from Cytec Industries) and 9 g of hydrazine hydrate. The dispersion was stirred for an additional 15 minutes. The solids content of the dispersion was 35%. The viscosity of the dispersion was 140 mPa.s, as measured at 25°C using a Brookfield LVF Viscometer.

### Example 2: preparation of polyurethane dispersion

Under a nitrogen atmosphere a mixture of 435 g of a polycarbonate diol, derived from hexanediol, with a molecular weight of 2000, 250 g of dipropylene glycol dimethyl ether, 65 g of iso-butyl-(bis-n-hydroxypropyl)phosphine oxide and 25 g of dimethylolpropanoic acid were heated to 50°C while stirring. 225 g of 3-isocyanatomethyl-3,5,5-trimethyl-cyclohexylisocyanate together with 0.05 g of K-Kat 348 (from King Industries) as catalyst were added and the mixture was heated to 90°C and stirred for 2 hours to form a polyurethane prepolymer. The reaction was cooled down and the amount of remaining NCO was measured. A mixture was made of 450 g of the prepolymer and 8 g of triethylamine, and this mixture was dispersed into a water phase consisting of 520 g of water, 10 g of Provichem 2588P (a 50% solution of sodium dioctyl sulfosuccinate in dipropylene glycol dimethyl ether, from Proviron Functional Chemicals NV) and 7 g of hydrazine hydrate. The dispersion was stirred for an additional 15 minutes. The solids content of the dispersion was 35%. The viscosity of the dispersion was 900 mPa.s, as measured at 25°C using a Brookfield LVF Viscometer.

### Example 3: evaluative tests

Flame retardancy tests were performed after applying a mixture of the aqueous polyurethane dispersions and a crosslinker on hook and loop tapes, which were then dried during 2 minutes at 90°C followed by curing for 3 minutes at 150°C. The amount applied on the hook and loop tape was between 50 and 60 g of dried mixture, per square meter of hook and loop tape. The hook and loop tapes were made from 6,6-polyamide, also known as nylon. The tape weight was 265 g per square meter for the hook black tape and 275 g per square meter of the hook red tape. Flame retardancy was evaluated by applying a flame (from an alcohol Bunsen burner) during 10 seconds to a small sample (approx. 8 x 10 cm) and measuring the total time that the flame remains burning until the flame was totally extinguished. Also evaluated was whether drops from the sample drop while burning or while extinguished.

| Aqueous Polyurethane Dispersion | Crosslinker | Burn time. Hook red tape | Burn time. Hook black tape |
|---|---|---|---|
| Example 1 | 5% XR-5577^{a} | 8 seconds | 15 seconds |
| Example 1 | 2.4% Cymel 373^{b} | 7 seconds | 12 seconds |
| Example 2 | 2.4% Cymel 373 | 7 seconds | 11 seconds |
| RU-13-027^{c} | 2.4% Cymel 373 | 10 seconds | 25 seconds, burning drops |

| | | | |
|---|---|---|---|
| a XR-5577 is an aqueous polycarbodiimide crosslinker from Stahl Europe BV. b Cymel 373 is an aqueous solution of a modified melamine from Allnex SA. c RU-13-027 is an aqueous polyurethane dispersion containing halogen flame retardant component, from Stahl Europe BV. | | | |

The burn times obtained with the mixtures of Example 1 and Example 2 were shorter than the burn time obtained with reference sample made from aqueous polyurethane dispersion RU-13-027, which contains an halogen component. This was the case for both types of hook and loop tape, the hook red PA 6,6 tape and the hook black PA 6,6 tape. For Example 1, Example 2 and reference RU-13-027 a modified melamine was used as crosslinker, and for Example 1 also an aqueous polycarbodiimide crosslinker was used as crosslinker. The burn times obtained with the mixtures of Example 1 were slightly longer with the aqueous polycarbodiimide crosslinker than with the modified melamine, but still shorter than the mixture of reference halogen-containing RU-13-027 with the modified melamine as the crosslinker. The results demonstrate that shorter or similar burn times can be obtained with the mixtures from halogen-free Examples 1 and 2 as with mixture from halogen-containing reference RU-13-027.

## Claims

1. A process for the preparation of an aqueous polyurethane dispersion comprising the steps of:
i) synthesizing a polyurethane prepolymer from isocyanates, polyols, which may include polyols with hydrophilic groups or polyols that have an additional functional group that is capable of forming a salt, and a phosphine oxide polyol, preferably a phosphine oxide diol or a phosphine oxide triol; and
ii) dispersing the obtained prepolymer into a water phase optionally comprising other additives,
(iii) adding one or more neutralizing agents prior to, simultaneously with or after dispersing the prepolymer in water,
(iv) forming polyurethane by reacting with one or more extension agents simultaneously with or subsequent to the dispersing, after which optionally other additives may be added.

2. A process according to claim 1, wherein the phosphine oxide polyol is a phosphine-oxide containing at least two hydroxyalkyl groups and having the formula (HO-R'-)₂P(=O)R, wherein the R' group is an alkyl chain of e.g. 2 to 5 carbon atoms with preference to 3 carbon atoms, which may be linear or branched or further substituted, and R is an alkyl, cycloalkyl or aryl radical of e.g. from 2 to 8 carbon atoms which may also contain additional functional groups like hydroxyl or another phosphine oxide..

3. A process according to claim 1 or 2, wherein the phosphine oxide polyol is iso-butyl-(bis-n-hydroxypropyl)phosphine oxide.

4. A process according to any one of claims 1 to 3, wherein between 1 weight% and 20 weight%, preferably between 2 weight% and 15 weight%, most preferably between 3 weight% and 12 weight% of the phosphine oxide polyol, compared to total weight of the polyol and isocyanate components in the prepolymer, is used.

5. A process according to any one of claims 1 to 4, wherein the phosphine oxide polyol is reacted simultaneously with all the other reactive components in the prepolymer or is reacted last with the isocyanate components, subsequent to the reaction of isocyanate components with other isocyanate-reactive components.

6. A process according to any of claims 1 to 5, wherein the isocyanates are aliphatic di-isocyanates, aromatic di-isocyanates, or a mixture of aromatic and aliphatic di-isocyanates, such as toluene-2,4-diisocyanate, toluene-2,6-diisocyanate and mixtures thereof, diphenylmethane-4,4-diisocyanate, 1,4-phenylenediisocyanate, dicyclohexylmethane-4,4'-diisocyanate, 3-isocyanatomethyl-3,5,5-trimethylcyclohexylisocyanate, 1,6-hexyldi-isocyanate, 1,5-pentyldiisocyanate, 1,3-bis(isocyanatomethyl)cyclo-hexane, 2,2,4-trimethyl-1,6-diisocyanatohexane (2,2,4-isomer, 2,4,4-isomer, or mixture thereof), 1,4-cyclohexyldiiso-cyanate, norbonyldiisocyanate, p-xylylene diisocyanate, 2,4'-diphenylmethane diisocyanate, and/or 1,5-naphthylene diisocyanate.

7. A process according to any of claims 1 to 6, wherein the polyols are selected from the group of polyester polyols, polyesteramide polyols, polyether polyols, polythioether polyols, polycarbonate polyols, polyacetal polyols, polyolefin polyols or polysiloxane polyols or mixtures thereof, and optionally diols or triols with molecular weight below 500.

8. A process according to any of claims 1 to 7, wherein polyols with hydrophilic groups or polyols that have an additional functional group that is capable of forming a salt, are polyethoxy diol, a poly(ethoxy/-propoxy) diol, a diol containing a pendant ethoxy or (ethoxy/propoxy) chain, a diol containing a carboxylic acid, a diol containing a sulfonic group, a diol containing a phosphate group, a polyethoxy mono-ol, a poly(ethoxy/-propoxy) mono-ol, a mono-ol containing a pendant ethoxy or (ethoxy/propoxy) chain, a mono-ol containing a carboxylic acid or a sulphonic acid or salt, or mixtures thereof.

9. A process according to any of claims 1 to 8, wherein the extension agent is a polyol, water, an amino alcohol, ammonia, a primary or secondary aliphatic, alicyclic, aromatic, araliphatic or heterocyclic amine especially a diamine, hydrazine or a substituted hydrazine, or a mixture thereof, in which water-soluble extension agents are preferred.

10. A process according to any of claims 1 to 9, wherein the neutralising agent is a tertiary amines such as tripropylamine, dimethyl butyl amine, dimethyl ethanol amine, diethyl ethanol amine, triethylamine, 2-amino-2-methyl-1-propanol and N-ethylmorpholine, or an alkaline metal hydroxides such as sodium hydroxide, potassium hydroxide, lithium hydroxide or non-volatile tertiary amines such as N-butyldiethanolamine or N,N-bis[3-(dimethylamino)propyl]-N',N'-dimethylpropane-1,3-diamine or mixtures thereof.

11. A process according to any of claims 1 to 10, wherein the prepolymer may contain between 0% and 35 weight%, preferably less than 20 weight% of co-solvents.

12. A process according to any of claims 1 to 11, wherein the solids content of the aqueous polyurethane dispersion is at least 30 weight%, preferably at least 35 weight%.

13. A dispersion obtainable by the process as defined in any one of the preceding claims.

14. A coating or film obtained, preferably on a flexible sheet-like substrate, from a dispersion as defined in claim 13.

## Patentansprüche

1. Verfahren für die Herstellung einer wässrigen Polyurethan-Dispersion, umfassend die Schritte von:
i) Synthetisieren eines Polyurethan-Prepolymers aus Isocyanaten, Polyolen, die Polyole mit hydrophilen Gruppen oder Polyole, die eine zusätzliche funktionellen Gruppe haben, die fähig ist, ein Salz zu bilden, einschließen können, und einem Phosphinoxidpolyol, vorzugsweise einem Phosphinoxiddiol oder einem Phosphinoxidtriol; und
ii) Dispergieren des erhaltenen Prepolymers in eine Wasserphase, optional umfassend andere Additive,
(iii) Zugeben eines oder mehrerer Neutralisationsmittel vor, gleichzeitig mit oder nach dem Dispergieren des Prepolymers in Wasser,
(iv) Bilden von Polyurethan durch Reagieren mit einem oder mehreren Extensionsmitteln gleichzeitig mit oder nach dem Dispergieren, wonach optional andere Additive zugegeben werden können.

2. Verfahren nach Anspruch 1, wobei das Phosphinoxidpolyol ein Phosphinoxid ist, enthaltend wenigstens zwei Hydroxyalkylgruppen und mit der Formel (HO-R'-)₂P(=O)R, wobei die R'-Gruppe eine Alkylkette von z. B. 2 bis 5 Kohlenstoffatomen, bevorzugt 3 Kohlenstoffatomen, ist, die linear oder verzweigt oder ferner substituiert sein kann, und R ein Alkyl-, Cycloalkyl- oder Arylradikal von z. B. 2 bis 8 Kohlenstoffatomen ist, das auch zusätzliche funktionelle Gruppen wie Hydroxyl oder ein anderes Phosphinoxid enthalten kann.

3. Verfahren nach Anspruch 1 oder 2, wobei das Phosphinoxidpolyol Iso-Butyl-(bis-n-hydroxypropyl)phosphinoxid ist.

4. Verfahren nach einem der Ansprüche 1 bis 3, wobei zwischen 1 Gew.-% und 20 Gew.-%, vorzugsweise zwischen 2 Gew.-% und 15 Gew.-%, am meisten bevorzugt zwischen 3 Gew.-% und 12 Gew.-% des Phosphinoxidpolyols, verglichen zum Gesamtgewicht der Polyol- und Isocyanatkomponenten in dem Prepolymer, verwendet werden.

5. Verfahren nach einem der Ansprüche 1 bis 4, wobei das Phosphinoxidpolyol gleichzeitig mit allen anderen reaktiven Komponenten in dem Prepolymer umgesetzt wird oder zuletzt mit den Isocyanatkomponenten umgesetzt wird, nach der Reaktion von Isocyanatkomponenten mit anderen isocyanatreaktiven Komponenten.

6. Verfahren nach einem der Ansprüche 1 bis 5, wobei die Isocyanate aliphatische Di-Isocyanate, aromatische Di-Isocyanate, oder eine Mischung von aromatischen und aliphatischen Di-Isocyanaten ist, wie Toluol-2,4-Diisocyanat, Toluol-2,6-Diisocyanat und Mischungen davon, Diphenylmethan-4,4-diisocyanat, 1,4-Phenylendiisocyanat, Dicyclohexylmethan-4,4'-diisocyanat, 3-Isocyanatomethyl-3,5,5-Trimethylcyclohexylisocyanat, 1,6-Hexyldiisocyanat, 1,5-Pentyldiisocyanat, 1,3-Bis(isocyanatomethyl)cyclohexan, 2,2,4-Trimethyl-1,6-diisocyanatohexan (2,2,4-Isomer, 2,4,4-Isomer oder Mischung davon), 1,4-Cyclohexyldiisocyanat, Norbornyldiisocyanat, p-Xylylendiisocyanat, 2,4'-Diphenylmethandiisocyanat, und/oder 1,5-Naphthylendiisocyanat.

7. Verfahren nach einem der Ansprüche 1 bis 6, wobei die Polyole ausgewählt sind aus der Gruppe von Polyesterpolyolen, Polyesteramidpolyolen, Polyetherpolyolen, Polythioetherpolyolen, Polycarbonatpolyolen, Polyacetalpolyolen, Polyolefinpolyolen oder Polysiloxanpolyolen oder Mischungen davon, und optional Diole oder Triole mit Molekulargewicht unter 500.

8. Verfahren nach einem der Ansprüche 1 bis 7, wobei Polyole mit hydrophilen Gruppen oder Polyolen, die eine zusätzliche funktionelle Gruppe haben, die fähig ist, ein Salz zu bilden, ein Polyethoxydiol, ein Poly(ethoxy/-propoxy)diol, ein Diol, enthaltend eine Ethoxy- oder (Ethoxy/Propoxy)-Seitenkette, ein Diol, enthaltend eine Carbonsäure, ein Diol, enthaltend eine Sulfongruppe, ein Diol, enthaltend eine Phosphatgruppe, ein Polyethoxymonool, ein Poly(ethoxy/-propoxy)monool, ein Monool, enthaltend eine Ethoxy- oder (Ethoxy/Propoxy)-Seitenkette, ein Monool, enthaltend eine Carbonsäure oder eine Sulfonsäure oder Salz, oder Mischungen davon sind.

9. Verfahren nach einem der Ansprüche 1 bis 8, wobei das Extensionsmittel ein Polyol, Wasser, ein Aminoalkohol, Ammoniak, ein primäres oder sekundäres aliphatisches, alizyklisches, aromatisches, araliphatisches oder heterozyklisches Amin, insbesondere ein Diamin, Hydrazin oder ein substituiertes Hydrazin, oder eine Mischung davon ist, wobei wasserlösliche Streckmittel bevorzugt sind.

10. Verfahren nach einem der Ansprüche 1 bis 9, wobei das Neutralisationsmittel ein tertiäres Amin wie Tripropylamin, Dimethylbutylamin, Dimethylethanolamin, Diethylethanolamin, Triethylamin, 2-Amino-2-methyl-1-propanol und N-Ethylmorpholin ist, oder ein Alkalimetallhydroxid wie Natriumhydroxid, Kaliumhydroxid, Lithiumhydroxid oder nicht-flüchtige tertiäre Amine wie N-Butyldiethanolamin oder N,N-Bis[3-(dimethylamino)propyl]-N',N'-dimethylpropan-1,3-diamin oder Mischungen davon.

11. Verfahren nach einem der Ansprüche 1 bis 10, wobei das Prepolymer zwischen 0 und 35 Gew.-%, vorzugsweise weniger als 20 Gew.-%, an Co-Lösungsmitteln enthalten kann.

12. Verfahren nach einem der Ansprüche 1 bis 11, wobei der Feststoffgehalt der wässrigen Polyurethan-Dispersion wenigstens 30 Gew.-%, vorzugsweise wenigstens 35 Gew.-% ist.

13. Dispersion, erhältlich durch das Verfahren, wie in einem der vorhergehenden Ansprüche definiert,.

14. Eine Beschichtung oder ein Film, erhalten, vorzugsweise auf einem flexiblen folienartigen Substrat, aus einer Dispersion gemäß Anspruch 13.

## Revendications

1. Un procédé de préparation d'une dispersion aqueuse de polyuréthane comprenant les étapes suivantes :
i) former par synthèse un prépolymère de polyuréthane à partir d'isocyanates, de polyols, qui peuvent inclure des polyols à groupes hydrophiles ou des polyols qui ont un groupe fonctionnel supplémentaire capable de former un sel, et un polyol d'oxyde de phosphine, de préférence un diol d'oxyde de phosphine ou un triol d'oxyde de phosphine ; et
ii) disperser le prépolymère obtenu dans une phase aqueuse comprenant éventuellement d'autres additifs,
(iii) l'ajout d'un ou de plusieurs agents neutralisants avant, simultanément ou après la dispersion du prépolymère dans l'eau,
iv) la formation de polyuréthane par réaction avec un ou plusieurs agents d'extension simultanément avec ou après la dispersion, après quoi éventuellement d'autres additifs peuvent être ajoutés.

2. Un procédé selon la revendication 1, dans lequel le polyol d'oxyde de phosphine est un oxyde de phosphine contenant au moins deux groupements hydroxyalkyles et présentant la formule (HO-R'-)₂P(=O)R, dans laquelle le groupement R' est une chaîne alkyle par exemple de 2 à 5 atomes de carbone, de préférence à 3 atomes de carbone, qui peuvent être linéaires ou ramifiés ou en plus en outre substitués, et R est un radical alkyle, cycloalkyle ou aryle de par exemple 2 à 8 atomes de carbone qui peuvent également contenir des groupes fonctionnels supplémentaires comme l'hydroxyle ou un autre oxyde de phosphine.

3. Un procédé selon la revendication 1 ou 2, dans lequel le polyol d'oxyde de phosphine est de l'oxyde iso-butyl-(bis-n-hydroxypropyl) phosphine.

4. Un procédé selon l'une quelconque des revendications 1 à 3, dans lequel est utilisé entre 1% en poids et 20% en poids, de préférence entre 2% en poids et 15 % en poids, plus préférablement entre 3% en poids et 12 % en poids du polyol d'oxyde de phosphine, comparé au poids total des composants polyol et isocyanate du prépolymère.

5. Un procédé selon l'une quelconque des revendications 1 à 4, dans lequel le polyol d'oxyde de phosphine est mis à réagir simultanément avec tous les autres composants réactifs du prépolymère ou est mis à réagir en dernier avec les composants isocyanate, suite à la réaction des composants isocyanates avec d'autres composants réactifs aux isocyanates.

6. Un procédé selon l'une quelconque des revendications 1 à 5, dans lequel les isocyanates sont des di-isocyanates aliphatiques, des di-isocyanates aromatiques, ou un mélange de di-isocyanates aromatiques et aliphatiques, tels que le toluène-2,4-diisocyanate, le toluène-2,6-diisocyanate et les mélanges en dérivant, le diphénylméthane-4,4-diisocyanate, le 1,4-phénylènediisocyanate, le dicyclohexylméthane-4,4'-diisocyanate, le 3-isocyanatométhyl-3,5,5-triméthylcyclohexylisocyanate, le 1,6-hexyldi-isocyanate, le 1,5-pentyldiisocyanate, le 1,3-bis(isocyanatométhyl)-cyclohexane, le 2,2,4-triméthyl-1,6-diisocyanatohexane(2,2,4-isomère, 2,4,4-isomère, ou les mélanges en dérivant), le 1,4-cyclohexyldiisocyanate, le diisocyanate de norbonyle, le diisocyanate de p-xylylène, le diisocyanate de 2,4'-diphénylméthane et/ou diisocyanate de 1,5-naphtylène.

7. Un procédé selon l'une quelconque des revendications 1 à 6, dans lequel les polyols sont choisis dans le groupe des polyesters polyols, polyesteramides polyols, polyéther polyols, polythioéther polyols, polycarbonate polyols, polyacétal polyols, polyoléfines polyols ou polysiloxanes polyols ou les mélanges en dérivant, et éventuellement des diols ou triols de poids moléculaire inférieur à 500.

8. Un procédé selon l'une quelconque des revendications 1 à 7, dans lequel des polyols à groupes hydrophiles ou des polyols qui possèdent un groupement fonctionnel supplémentaire capable de former un sel, sont des polyéthoxy diol, un poly(éthoxy/-propoxy) diol, un diol contenant une chaîne pendante éthoxy ou (éthoxy/propoxy), un diol contenant un acide carboxylique, un diol contenant un groupe sulfonique, un diol contenant un groupe phosphate, un polyéthoxy mono-ol, un poly(éthoxy/-propoxy) mono-ol, un mono-ol contenant une chaîne pendante éthoxy ou (éthoxy/propoxy), un mono-ol contenant un acide carboxylique ou un acide sulfonique ou sel, ou mélanges en dérivant.

9. Un procédé selon l'une quelconque des revendications 1 à 8, dans lequel l'agent d'extension est un polyol, de l'eau, un alcool aminé, de l'ammoniac, une amine aliphatique, alicyclique, aromatique, araliphatique ou hétérocyclique primaire ou secondaire, notamment une diamine, une hydrazine ou une hydrazine substituée, ou un les mélanges en dérivant, parmi lesquels sont préférés les agents d'extension hrydrosolubles.

10. Un procédé selon l'une quelconque des revendications 1 à 9, dans lequel l'agent neutralisant consiste en amines tertiaires telles que la tripropylamine, la diméthylbutylamine, la diméthyléthanol amine, la diéthyléthanol amine, la triéthylamine, le 2-amino-2-méthyl-1-propanol et la N-éthylmorpholine, ou des hydroxydes de métal alcalin tels que l'hydroxyde de sodium, l'hydroxyde de potassium, l'hydroxyde de lithium ou des amines tertiaires non volatiles telles que la N-butyldiéthanolamine ou la N,N-bis-[3-(diméthylamno)propyl]-N',N'-diméthylpropane-1,3-diamine ou les mélanges en dérivant.

11. Un procédé selon l'une quelconque des revendications 1 à 10, dans lequel le prépolymère peut contenir entre 0% et 35% en poids, de préférence moins de 20% en poids de co-solvants.

12. Un procédé selon l'une quelconque des revendications 1 à 11, dans lequel la teneur en solides de la dispersion aqueuse de polyuréthane est d'au moins 30% en poids, de préférence d'au moins 35 % en poids.

13. Une dispersion pouvant être obtenue par le procédé tel que défini dans l'une quelconque des revendications précédentes.

14. Un revêtement ou film obtenu, de préférence sur un substrat souple en forme de feuille, obtenu à partir d'une dispersion telle que définie dans la revendication 13.
